(19) Europäisches Patentamt / European Patent Office / Office européen des brevets

(11) **EP 4 672 375 A1**

(12) **EUROPEAN PATENT APPLICATION**
published in accordance with Art. 153(4) EPC

(43) Date of publication:
**31.12.2025 Bulletin 2026/01**

(21) Application number: **24792989.6**

(22) Date of filing: **17.04.2024**

(51) International Patent Classification (IPC):
**H01M 4/525** (2010.01)  **H01M 4/505** (2010.01)
**H01M 4/36** (2006.01)  **C01G 53/00** (2025.01)
**H01M 4/02** (2006.01)

(52) Cooperative Patent Classification (CPC):
Y02E 60/10

(86) International application number:
**PCT/KR2024/005123**

(87) International publication number:
**WO 2024/219804 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.04.2023  KR 20230051887**

(71) Applicant: **LG Chem, Ltd.
Seoul 07336 (KR)**

(72) Inventors:
• **CHOE, Gwang Seok
Daejeon 34122 (KR)**
• **JEONG, Myung Gi
Daejeon 34122 (KR)**
• **JU, Jin Wook
Daejeon 34122 (KR)**
• **WOO, Sang Won
Daejeon 34122 (KR)**
• **LYM, Jae Seung
Daejeon 34122 (KR)**
• **KIM, Jeong Won
Daejeon 34122 (KR)**
• **JUNG, Jin Hee
Daejeon 34122 (KR)**
• **KIM, Sol Jin
Daejeon 34122 (KR)**
• **KIM, Jun Seong
Daejeon 34122 (KR)**

(74) Representative: **Hoffmann Eitle
Patent- und Rechtsanwälte PartmbB
Arabellastraße 30
81925 München (DE)**

(54) **CATHODE ACTIVE MATERIAL, METHOD FOR PRODUCING SAME, AND CATHODE AND LITHIUM SECONDARY BATTERY EACH COMPRISING SAME**

(57)    The present invention relates to a cathode active material, a method for producing same, and a cathode and a lithium secondary battery each comprising same, the cathode active material being in the form of a single particle and having an almost unchanged particle size distribution even after rolling, due to the small deformation of particles, wherein the cathode active material comprises a lithium composite transition metal oxide in the form of a single particle, and the lithium composite transition metal oxide comprises Ni, Co, Mn, Al, and M1, in which M1 is at least one selected from Zr, Y, K, Sr, and Ba, and satisfies equation 1. [Equation 1] $|1-\alpha/\beta| \leq 0.1$, wherein $\alpha$ is a value of $D_{90}-D_{10})/D_{50}$, and $\beta$ is a value of $D^{90}-D^{10})/D_{50}$ after the cathode active material is rolled at 1,000 kgf/cm$_2$ to 7,000 kgf/cm$_2$.

EP 4 672 375 A1

**Description**

**TECHNICAL FIELD**

Cross-reference to Related Applications

This application claims priority from Korean Patent Application No. 10-2023-0051887, filed on April 20, 2023, the disclosure of which is incorporated by reference herein.

Technical Field

The present invention relates to a positive electrode active material, a preparation method thereof, and a positive electrode and a lithium secondary battery which include the positive electrode active material, and particularly, to a positive electrode active material including a lithium composite transition metal oxide in a form of a single particle which may improve performance of a battery, a preparation method thereof, and a positive electrode and a lithium secondary battery which include the positive electrode active material.

**BACKGROUND ART**

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, for example, lithium cobalt oxide such as $LiCoO_2$, lithium nickel oxide such as $LiNiO_2$, lithium manganese oxide such as $LiMnO_2$ or $LiMn_2O_4$, and lithium iron phosphate oxide, such as $LiFePO_4$, have been developed as a positive electrode active material of the lithium secondary battery, and recently, lithium composite transition metal oxides including two or more transition metals, such as Li $[Ni_aCo_bMn_c]O_2$, $Li[Ni_aCo_bAl_c]O_2$, and Li $[Ni_aCo_bMn_cAl_d]O_2$, have been developed and widely used.

The lithium composite transition metal oxides including two or more transition metals, which have been developed to date, are typically prepared in a form of a spherical secondary particle in which tens to hundreds of primary particles are aggregated, wherein, recently, in order to solve structural and thermal stability problems of the positive electrode active material in the form of a secondary particle itself, development of a positive electrode active material in a form of a single particle is accelerating. Specifically, the positive electrode active material in the form of a secondary particle has a limitation in that a volume of battery expands due to generation of a lot of gas when it is used in the lithium secondary battery, and has a limitation in that risk of fire is also increased when an amount of nickel in a positive electrode material is increased for high capacity, and, accordingly, demand for the development of the positive electrode active material in the form of a single particle with excellent stability is increasing.

Thus, there is a need to develop a positive electrode active material in the form of a single particle which may improve various performances of a battery when used in the battery while having excellent stability.

**DISCLOSURE OF THE INVENTION**

**TECHNICAL PROBLEM**

An aspect of the present invention provides a positive electrode active material including a lithium composite transition metal oxide in a form of a single particle which may improve capacity, initial efficiency, lifetime, and resistance of a battery when used in the battery while having excellent structural stability.

Another aspect of the present invention provides a preparation method for preparing the positive electrode active material.

Another aspect of the present invention provides a lithium secondary battery in which performance is improved by including the positive electrode active material.

**TECHNICAL SOLUTION**

In order to solve the above-described tasks, the present invention provides a positive electrode active material, a method of preparing a positive electrode active material, a positive electrode, and a lithium secondary battery.

(1) The present invention provides a positive electrode active material including a lithium composite transition metal oxide in a form of a single particle, wherein the lithium composite transition metal oxide includes nickel (Ni), cobalt (Co), manganese (Mn), aluminum (Al), and M1, wherein the M1 is at least one selected from zirconium (Zr), yttrium (Y), potassium (K), strontium (Sr), and barium (Ba), and satisfying Equation 1.

$$[\text{Equation 1}]$$

$$|1-\alpha/\beta| \leq 0.1$$

In Equation 1,
$\alpha$ is a value of $(D_{90}-D_{10})/D_{50}$, and $\beta$ is a value of $(D_{90}-D_{10})/D_{50}$ after rolling the positive electrode active material at 1,000 $kgf/cm^2$ to 7,000 $kgf/cm^2$.
(2) The present invention provides the positive electrode active material of (1) above, wherein the lithium composite transition metal oxide has a layered structure.
(3) The present invention provides the positive electrode active material of (1) or (2) above, wherein the lithium composite transition metal oxide has an average particle diameter ($D_{50}$) of 3.00 $\mu$m to 8.00 $\mu$m.
(4) The present invention provides the positive electrode active material of any one of (1) to (3) above, wherein the lithium composite transition metal oxide is doped with the Al and the M1.
(5) The present invention provides the positive electrode active material of any one of (1) to (4) above, wherein the Al is included in an amount of 500 ppm to 3,000 ppm based on a total weight of the lithium composite transition metal oxide.
(6) The present invention provides the positive electrode active material of any one of (1) to (5) above, wherein the M1 is included in an amount of 100 ppm to 5,000 ppm based on a total weight of the lithium composite transition metal oxide.
(7) The present invention provides the positive electrode active material of any one of (1) to (6) above, wherein the lithium composite transition metal oxide includes 60 mol% or more of the nickel based on the total number of moles of metals excluding lithium.
(8) The present invention provides the positive electrode active material of (1) to (7) above, wherein the lithium composite transition metal oxide has a composition represented by Formula 1.

$$[\text{Formula 1}] \qquad Li_x[Ni_aCo_bMn_cAl_dM1_eM2_f]O_{2-y}A_y$$

In Formula 1,

M1 is at least one selected from Zr, Y, K, Sr, and Ba,
M2 is at least one selected from boron (B), Ba, cerium (Ce), chromium (Cr), magnesium (Mg), vanadium (V), titanium (Ti), iron (Fe), zinc (Zn), silicon (Si), niobium (Nb), gallium (Ga), tin (Sn), molybdenum (Mo), tungsten (W), and phosphorus (P),
A is at least one selected from fluorine (F), chlorine (Cl), bromine (Br), iodine (I), and sulfur (S), and
$1.0 \leq x \leq 1.3$, $0.6 \leq a < 1$, $0.0 < b \leq 0.4$, $0.0 < c \leq 0.4$, $0.0 < d \leq 0.01$, $0.0 < e \leq 0.005$, $0.0 \leq f \leq 0.2$, $a+b+c+d+e+f=1$, and $0 \leq y \leq 0.2$.

(9) The present invention provides a method of preparing a positive electrode active material which includes steps of:
(A) preparing a mixture by mixing a positive electrode active material precursor containing Ni, Co, and Mn, an aluminum-containing raw material, an M1-containing raw material, and a first lithium-containing raw material;

(B) preparing a primary sintered product by performing primary sintering on the mixture at a temperature of 800°C to 950°C; and
(C) preparing a secondary sintered product by mixing a second lithium-containing raw material with the primary sintered product and performing secondary sintering at a temperature of 680°C to 850°C,
wherein the M1 is at least one selected from Zr, Y, K, Sr, and Ba, and
the M1-containing raw material is mixed in an amount of 100 ppm to 5,000 ppm based on a total weight of the positive electrode active material precursor.

(10) The present invention provides the method of (9) above, wherein the method further includes a step of (B') grinding the primary sintered product, before step (C).
(11) The present invention provides the method of (9) or (10) above, wherein the method further includes a step of (C') grinding the secondary sintered product.
(12) The present invention provides a positive electrode including the positive electrode active material of any one of (1) to (8) above.

(13) The present invention provides a lithium secondary battery including the positive electrode of (12) above; a negative electrode; a separator disposed between the positive electrode and the negative electrode; and an electrolyte.

**ADVANTAGEOUS EFFECTS**

Since a positive electrode active material of the present invention includes a lithium composite transition metal oxide in a form of a single particle, wherein the lithium composite transition metal oxide includes nickel (Ni), cobalt (Co), manganese (Mn), aluminum (Al), and M1, wherein M1 is at least one selected from zirconium (Zr), yttrium (Y), potassium (K), strontium (Sr), and barium (Ba), and satisfies Equation 1 described in the present specification, a particle size distribution hardly changes even after rolling due to small particle deformation, and thus, the positive electrode active material of the present invention may improve capacity, initial efficiency, lifetime, and resistance of a lithium secondary battery.

Also, according to a method of preparing a positive electrode active material of the present invention, the above-described positive electrode active material may be effectively prepared.

**BEST MODE FOR CARRYING OUT THE INVENTION**

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms 'include,' 'comprise,' or 'have' in this specification specify the presence of stated features, numbers, steps, elements, or combinations thereof, but do not preclude the presence or addition of one or more other features, numbers, steps, elements, or combinations thereof.

The term 'on' in the present specification means not only a case in which one component is formed directly on an upper surface of another component, but also includes a case in which intervening components may also be present.

In the present specification, the expression 'positive electrode active material in a form of a single particle' is a concept in contrast to a positive electrode active material in a form of a spherical secondary particle formed by aggregation of tens to hundreds of primary particles which is prepared by a conventional method, wherein it means a positive electrode active material composed of 10 or less primary particles. Specifically, in the present invention, the positive electrode active material in the form of a single particle may be a single particle composed of one primary particle, or may be in the form of a secondary particle in which several primary particles are aggregated.

The expression 'primary particle' denotes the smallest unit of particles recognized when a positive electrode active material is observed through a scanning electron microscope, and the expression 'secondary particle' denotes a secondary structure formed by aggregation of a plurality of the primary particles.

In the present specification, the expression 'average particle diameter $(D_{50})$' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

<u>Positive Electrode Active Material</u>

The present invention provides a positive electrode active material including a lithium composite transition metal oxide in a form of a single particle, wherein the lithium composite transition metal oxide includes nickel (Ni), cobalt (Co), manganese (Mn), aluminum (Al), and M1, wherein the M1 is at least one selected from zirconium (Zr), yttrium (Y), potassium (K), strontium (Sr), and barium (Ba), and satisfying Equation 1 below. The lithium composite transition metal oxide may have a layered structure.

[Equation 1]

$$|1-\alpha/\beta| \le 0.1$$

In Equation 1,

$\alpha$ is a value of $(D_{90}-D_{10})/D_{50}$, and $\beta$ is a value of $(D_{90}-D_{10})/D_{50}$ after rolling the positive electrode active material at 1,000 $kgf/cm^2$ to 7,000 $kgf/cm^2$.

The present inventors have found that, in a case in which a positive electrode active material includes a lithium composite transition metal oxide in a form of a single particle, wherein the lithium composite transition metal oxide includes Ni, Co, Mn, Al, and M1, and satisfies Equation 1, the positive electrode active material may improve various performances of a lithium secondary battery due to small particle deformation of the positive electrode active material, thereby leading to the completion of the present invention. Specifically, the present inventors have found that, in a case in which the lithium composite transition metal oxide essentially includes Al, the Al may improve the performance of the lithium secondary battery by increasing structural stability through replacing positions of some transition metal ions in a crystal structure, and, in a case in which the lithium composite transition metal oxide includes M1 at the same time, a positive electrode active material with excellent particle strength and large grain size may be provided. In a case in which the positive electrode active material does not include Al, since thermal and structural stabilities of the positive electrode active material are low to cause deformation of an oxide lattice during charge and discharge cycles, there is a problem in battery performance, and, in a case in which the positive electrode active material does not include M1, there is a problem of not satisfying Equation 1, that is, a problem of low particle strength and/or a problem of small grain size.

According to the present invention, the M1, which is at least one selected from Zr, Y, K, Sr, and Ba, is an element capable of improving a degree of crystallinity and a degree of single particle formation of the positive electrode active material, wherein it may specifically be two or more selected from Zr, Y, K, Sr, and Ba, and may more specifically be Zr and Y.

According to the present invention, a value according to Equation 1 may be 0.1 or less, specifically, 0.1, 0.09, 0.08, 0.07, 0.06, or 0.05 or less. This means that the particle strength of the positive electrode active material is excellent so that there is little deformation even if a pressure is applied to the positive electrode active material, wherein, in a case in which the value according to Equation 1 is within the above range, capacity, initial efficiency, lifetime, or resistance performance of a battery including the positive electrode active material may be excellent. In a case in which the value according to Equation 1 is greater than 0.1, since the particle strength is low to increase particle destruction in an electrode, the lifetime and the resistance performance may be poor.

According to the present invention, the lithium composite transition metal oxide may have an average particle diameter ($D_{50}$) of 3.00 $\mu$m to 8.00 $\mu$m. The average particle diameter ($D_{50}$ of the lithium composite transition metal oxide may specifically be 3.00 $\mu$m, 3.50 $\mu$m or more, 7.00 $\mu$m, 7.50 $\mu$m, or 8.00 $\mu$m or less. In a case in which the average particle diameter ($D_{50}$) of the lithium composite transition metal oxide is within the above range, electrochemical performance may be optimized.

According to the present invention, the lithium composite transition metal oxide may be doped with Al and M1. In this case, that is, in a case in which the lithium composite transition metal oxide includes Al and M1 as dopants, the capacity, initial efficiency, lifetime, and resistance performance of the lithium secondary battery may be further improved because structural stability of the positive electrode active material is further increased, cation mixing is reduced, and a grain size is large.

In terms of increasing the grain size while further improving the structural stability of the positive electrode active material in the form of a single particle having a small average particle diameter, the lithium composite transition metal oxide may more specifically be doped with Al, Zr, and Y.

According to the present invention, the Al may be included in an amount of 500 ppm to 3,000 ppm based on a total weight of the lithium composite transition metal oxide. In this case, since an internal crystal structure of the positive electrode active material is stabilized, the capacity and resistance performance of the battery may be improved.

According to the present invention, the M1 may be included in an amount of 100 ppm to 5,000 ppm based on the total weight of the lithium composite transition metal oxide.

In a case in which the M1 is Y and Zr, the Y may be included in an amount of 100 ppm to 2,000 ppm based on the total weight of the lithium composite transition metal oxide, and the Zr may be included in an amount of 500 ppm to 5,000 ppm based on the total weight of the lithium composite transition metal oxide. In a case in which the amount of the Y is within the above range, since a size of grains included in one particle is large, the capacity and life performance of the battery may be improved, and, in a case in which the amount of the Zr is within the above range, since the Zr is stably doped in a lithium layer to improve the structural stability during intercalation and deintercalation of lithium, the particle strength is excellent, and, as a result, the lifetime and resistance performance of the battery may be improved.

According to the present invention, the lithium composite transition metal oxide may include 60 mol% or more, specifically 80 mol% or more, and more specifically 85 mol% or more of nickel based on the total number of moles of metals excluding lithium. That is, the lithium composite transition metal oxide may be a high-nickel (high Ni)-based lithium composite transition metal oxide. In this case, energy density of the lithium secondary battery may be improved.

According to the present invention, the lithium composite transition metal oxide may have a composition represented by the following Formula 1. In this case, the lithium composite transition metal oxide has a layered structure.

[Formula 1] $\quad Li_x[Ni_aCo_bMn_cAl_dM1_eM2_f]O_{2-y}A_y$

In Formula 1,

M1 is at least one selected from Zr, Y, K, Sr, and Ba,
M2 is at least one selected from boron (B), Ba, cerium (Ce), chromium (Cr), magnesium (Mg), vanadium (V), titanium (Ti), iron (Fe), zinc (Zn), silicon (Si), niobium (Nb), gallium (Ga), tin (Sn), molybdenum (Mo), tungsten (W), and phosphorus (P),
A is at least one selected from fluorine (F), chlorine (Cl), bromine (Br), iodine (I), and sulfur (S), and
$1.0 \leq x \leq 1.3$, $0.6 \leq a < 1$, $0.0 < b \leq 0.4$, $0.0 < c \leq 0.4$, $0.0 < d \leq 0.01$, $0.0 < e \leq 0.005$, $0.0 \leq f \leq 0.2$, $a+b+c+d+e+f=1$, and $0 \leq y \leq 0.2$.
a represents an atomic fraction of nickel among metallic elements in the lithium composite transition metal oxide, wherein a may be 0.6, 0.8, 0.85 or more, 0.95, 0.98, or 1.0 or less.
b represents an atomic fraction of cobalt among the metallic elements in the lithium composite transition metal oxide, wherein b may be 0.0, 0.01 or more, 0.15, 0.2, or 0.4 or less.
c represents an atomic fraction of manganese among the metallic elements in the lithium composite transition metal oxide, wherein c may be 0.0, 0.01 or more, 0.15, 0.2, or 0.4 or less.
d represents an atomic fraction of aluminum among the metallic elements in the lithium composite transition metal oxide, wherein d may be greater than 0.0, 0.002, 0.003 or more, 0.006, 0.008, or 0.01 or less.
e represents an atomic fraction of an M1 element among the metallic elements in the lithium composite transition metal oxide, wherein e may be greater than 0.0, 0.0001, 0.0002, 0.0006 or more, 0.002, 0.003, or 0.005 or less.
f represents an atomic fraction of an M2 element among the metallic elements in the lithium composite transition metal oxide, wherein f may be 0.0 or more, 0.05, 0.1, or 0.2 or less.

According to the present invention, the positive electrode active material may further include a coating portion containing cobalt (Co) which is formed on the lithium composite transition metal oxide in the form of a single particle. The coating portion may further include Al, Zr, or a combination thereof. In a case in which the positive electrode active material further includes the coating portion, an amount of residual lithium by-product may be reduced, the structural stability may be increased to improve the lifetime and resistance performance of the battery, and a gas generation amount may also be reduced. In this case, the coating portion may have a form of a thin film, and may be formed entirely or locally on the lithium composite transition metal oxide.

The Co present in the coating portion may be included in an amount of 0.5 mol% to 3 mol% based on the total number of moles of metals excluding lithium which are included in the lithium composite transition metal oxide. In this case, the residual lithium by-product may be further reduced, and the lifetime and resistance performance may be further improved.

The Al present in the coating portion may be included in an amount of 300 ppm to 10,000 ppm based on the total weight of the lithium composite transition metal oxide. In this case, since the structural stability is further increased, the lifetime and resistance performance may be further improved.

## Method of Preparing Positive Electrode Active Material

The present invention provides a method of preparing the above-described positive electrode active material. That is, the positive electrode active material according to the present invention is prepared by a method of preparing a positive electrode active material below.

The method of preparing a positive electrode active material according to the present invention includes steps of: (A) preparing a mixture by mixing a positive electrode active material precursor containing Ni, Co, and Mn, an aluminum-containing raw material, an M1-containing raw material, and a first lithium-containing raw material; (B) preparing a primary sintered product by performing primary sintering on the mixture at a temperature of 800°C to 950°C; and (C) preparing a secondary sintered product by mixing a second lithium-containing raw material with the primary sintered product and performing secondary sintering at a temperature of 680°C to 850°C. In this case, the M1 is at least one selected from Zr, Y, K, Sr, and Ba, and the M1-containing raw material is mixed in an amount of 100 ppm to 5,000 ppm based on a total weight of the positive electrode active material precursor.

The present inventors have found that, in a case in which lithium is added dividedly in steps (A) and (C), sintering is performed in two stages, and a predetermined amount or more of the M1 is added as a dopant before the primary sintering, a lithium transition metal oxide in the form of a single particle is generated, and a particle size distribution does not change much even after rolling due to small particle deformation of the positive electrode active material, thereby leading to the completion of the present invention.

The positive electrode active material precursor containing Ni, Co, and Mn may have a composition represented by Formula 2 or Formula 3 below.

$$[\text{Formula 2}] \qquad Ni_{a'}Co_{b'}Mn_{c'}M2_{d'}(OH)_2$$

$$[\text{Formula 3}] \qquad Ni_{a'}Co_{b'}Mn_{c'}M2_{d'}O\cdot OH$$

In Formulae 2 and 3,

M2 is at least one selected from B, Ba, Ce, Cr, Mg, V, Ti, Fe, Zn, Si, Nb, Ga, Sn, Mo, W, and P, and
$0.6 \leq a' < 1$, $0.0 < b' \leq 0.4$, $0.0 < c' \leq 0.4$, and $0.0 \leq d' \leq 0.2$.

The aluminum-containing raw material may be at least one selected from $Al(OH)_3$, $Al_2O_3$, $AlCl_3$, $Al(NO)_3$, $AlSO_4$, and $Al_2S_3$, may specifically be at least one selected from $Al(OH)_3$, $Al_2O_3$, and $Al(NO)_3$, and may more specifically be $Al(OH)_3$. The aluminum-containing raw material may be added in an amount of 500 ppm to 3,000 ppm based on the total weight of the positive electrode active material precursor. Specifically, the amount of the aluminum-containing raw material may be 500 ppm, 600 ppm, 700 ppm, 800 ppm, 900 ppm, 1,000 ppm, 1,100 ppm, 1,200 ppm, 1,300 ppm, 1,400 ppm or more, 2,800 ppm, 2,900 ppm, and 3,000 ppm or less based on the total weight of the positive electrode active material precursor. In this case, since the internal crystal structure of the positive electrode active material is stabilized, there is an advantage of better life performance of the battery.

The M1-containing raw material may be M1-containing hydroxide, oxide, chloride, nitric oxide, sulfur oxide, or sulfide, but is not limited thereto.

In a case in which the M1 is Y, an yttrium (Y)-containing raw material may be at least one selected from $YCl_3$, $Y_2O_3$, $Y(NO_3)_3$, $Y(OH)_3$, YSZ, $Y_2(SO_4)_3$, and $Y_2S_3$, may specifically be at least one selected from $Y_2O_3$ and $Y(OH)_3$, and may more specifically be $Y_2O_3$. The yttrium-containing raw material may be added in an amount of 100 ppm to 2,000 ppm based on the total weight of the positive electrode active material precursor. Specifically, the amount of the yttrium-containing raw material may be 100 ppm, 200 ppm, 300 ppm, 400 ppm, 500 ppm, 600 ppm, 700 ppm, 800 ppm, 900 ppm, 1,000 ppm or more, and 2,000 ppm or less based on the total weight of the positive electrode active material precursor. In this case, since the size of grains included in one particle is large, the capacity and life performance of the battery may be further improved.

Also, in a case in which the M1 is Zr, a zirconium-containing raw material may be at least one selected from $Zr(OH)_4$, $ZrO_2$, $Zr(NO_3)_4$, $ZrCl_4$, $ZrS_2$, $Zr(SO_4)_2$, and $C_8H_{12}O_8Zr$, may specifically be at least one selected from $Zr(OH)_4$ and $ZrO_2$, and may more specifically be $ZrO_2$. The zirconium-containing raw material may be added in an amount of 500 ppm to 5,000 ppm based on the total weight of the positive electrode active material precursor. Specifically, the amount of the zirconium-containing raw material may be 500 ppm, 1,000 ppm, 1,500 ppm or more, 3,000 ppm, 3,500 ppm, 4,000 ppm, 4,500 ppm, and 5,000 ppm or less based on the total weight of the positive electrode active material precursor. In this case, since the Zr is stably doped in the lithium layer to further improve the structural stability during intercalation and deintercalation of lithium, there is an advantage in that the particle strength is also further improved.

If the mixture is primarily sintered at a temperature of 800°C to 950°C, a primary sintered product in a form of a single particle is prepared while primary particles of the positive electrode active material precursor are aggregated. The primary sintering temperature may specifically be 800°C, 810°C, 820°C, 830°C, 840°C, 850°C or higher, 900°C, 910°C, 920°C, 930°C, 940°C, or 950°C or less. In a case in which the primary sintering temperature is within the above range, a structurally stable primary sintered product in the form of a single particle is prepared while the primary particles of the positive electrode active material precursor are aggregated, in a case in which the primary sintering temperature is less than 800°C, there is a problem in that the primary particles are not sufficiently aggregated, and, in a case in which the primary sintering temperature is greater than 950°C, there is a problem in that a structurally unstable sintered product with a low degree of crystallinity is prepared.

The primary sintering may be performed in an oxygen atmosphere, in terms of preventing degradation of the lithium transition metal oxide into a rock salt structure.

The primary sintering may be performed for 3 hours to 12 hours, specifically, 3 hours, 4 hours, 5 hours, 6 hours or more, 9 hours, 10 hours, 11 hours, or 12 hours or less, in terms of aggregating the primary particles and improving crystallinity of the primary sintered product.

If the primary sintered product is secondarily sintered at a temperature of 680°C to 850°C, a secondary sintered product is prepared while lithium is intercalated into the primary sintered product. In this case, the secondary sintered product is a lithium composite transition metal oxide in the form of a single particle. The secondary sintering temperature may specifically be 680°C, 700°C, 720°C, 740°C, 760°C, 780°C, 800°C or higher, 840°C, or 850°C or less. In a case in which the secondary sintering temperature is within the above range, there is an advantage in that the layered structure is restored while lithium is intercalated into the rock salt structure which may be formed on a surface of the primary sintered product due to the high temperature during the primary sintering and the lithium by-product is reduced. In a case in which the secondary sintering temperature is less than 680°C, there is a problem in that a lithium intercalation rate is low due to the low temperature, and, in a case in which the secondary sintering temperature is greater than 850°C, there is a problem in that the surface of the primary sintered product degrades into the rock salt structure due to the high temperature and the lithium by-product remains.

The secondary sintering may be performed in an oxygen atmosphere, in terms of preventing the degradation of the lithium transition metal oxide into the rock salt structure.

The secondary sintering may be performed for 3 hours to 12 hours, specifically, 3 hours, 4 hours, 5 hours, 6 hours, 9 hours or more, 9 hours, 10 hours, 11 hours, or 12 hours or less, in terms of increasing a degree of crystallinity of the internal crystal structure of the positive electrode active material.

The method of preparing a positive electrode active material according to the present invention may further include a step of (B') grinding the primary sintered product, before step (C). The step (B') may grind the primary sintered product such that an average particle diameter ($D_{50}$) is in a range of 3.50 $\mu$m to 6.00 $\mu$m, in terms of preventing an increase in initial resistance.

The method of preparing a positive electrode active material according to the present invention may further include a step of (C') grinding the secondary sintered product. The step (C') may grind the secondary sintered product such that an average particle diameter ($D_{50}$) is in a range of 3.50 $\mu$m to 6.00 $\mu$m, in terms of also preventing the increase in initial resistance.

The grinding of step (B') and step (C') may be performed using a pin mill, an air classifying mill (ACM), or a jet mill. With respect to the pin mill, milling may be performed at 18,000 rpm, with respect to the ACM, classification may be performed at 6,000 rpm and main milling may be performed at 12,000 rpm using equipment by Hosokawa Micron Corporation, and, with respect to the jet mill, classification may be performed at 3,500 rpm and milling may be performed at a pressure of 6 bars using equipment by ZM solution. In this case, a positive electrode active material having a desired average particle diameter ($D_{50}$) may be easily obtained.

The positive electrode active material according to the present invention is prepared by a process of adding the lithium-containing raw material in two portions. That is, the lithium-containing raw material may be dividedly added before the primary sintering and before the secondary sintering. In this case, there is an advantage in that the intercalation of lithium into the rock salt structure, which may be formed on the surface, favors the restoration of the layered structure. In a case in which the lithium-containing raw material is added at once before the primary sintering, there is a problem of electrochemical performance degradation due to an increase in lithium by-product, and, if the lithium-containing raw material is not added in the secondary sintering, a problem occurs that requires high temperature and long time due to a low reaction rate.

In a case in which the lithium-containing raw material is added in two portions, in step (A), the first lithium-containing raw material may be mixed such that a ratio (M:Li) of the total number of moles (M) of transition metals included in the positive electrode active material precursor to the number of moles (Li) of lithium included in the first lithium-containing raw material is 1:0.98, 1:0.99, 1:1.00, 1:1.01, 1:1.02 or more, 1:1.04, or 1:1.05 or less, and, in step (C), the second lithium-containing raw material may be mixed such that a ratio (M:Li) of the total number of moles (M) of the transition metals included in the positive electrode active material precursor of step (A) to the number of moles (Li) of lithium included in the second lithium-containing raw material is 1:0.01 or more, 1:0.05, 1:0.06, 1:0.07, 1:0.08, 1:0.09, or 1:1.10 or less.

The method of preparing a positive electrode active material according to the present invention may further include a step of (D) mixing the secondary sintered product and a cobalt-containing coating material and performing a heat treatment. In this case, a coating portion containing Co is formed on the secondary sintered product (lithium composite transition metal oxide in the form of a single particle).

According to the present invention, when mixing the secondary sintered product and the cobalt-containing coating material in step (D), an aluminum-containing coating material, a zirconium-containing coating material, or a combination thereof may be further mixed. In this case, the coating portion may further include Al, Zr, or a combination thereof in addition to the Co.

According to the present invention, the cobalt-containing coating material may be mixed in an amount such that a ratio (B/A) of the number of moles (B) of cobalt contained in the cobalt-containing coating material to the total number of moles (A) of metals excluding lithium, which are included in the secondary sintered product, is in a range of 0.01 to 0.03. In this case, there is an advantage in that the lithium by-product may be controlled in a positive electrode active material preparation process that does not include a washing process.

The cobalt-containing coating material may be at least one selected from $Co(OH)_2$, $Co_3O_4$, $CoO$, $(CH_3CO_2)_2Co$, $CoCl_2$, and $CoSO_4 \cdot xH_2O$, and may specifically be $Co(OH)_2$.

According to the present invention, the aluminum-containing coating material may be mixed in an amount of 0.03 part by weight to 0.10 part by weight based on 100 parts by weight of the secondary sintered product. In this case, lifetime, resistance, and gas generation amount may be improved by ensuring the structural stability.

The aluminum-containing coating material may be at least one selected from $Al(OH)_3$, $Al_2(SO_4)_3 \cdot xH_2O$, $Al_2O_3$, $Al(NO_3)_3 \cdot 9H_2O$, $AlCl_3$, and $C_2H_5O_4Al$, and may specifically be $Al(OH)_3$.

The zirconium-containing coating material may be at least one selected from $Zr(OH)_4$, $ZrO_2$, $Zr(NO_3)_4$, $ZrCl_4$, $ZrS_2$, $Zr(SO_4)_2$, and $C_8H_{12}O_8Zr$.

According to the present invention, the heat treatment may be performed in an oxygen atmosphere to prevent the degradation of the lithium transition metal oxide into the rock salt structure.

According to the present invention, in order to form the coating portion to an appropriate thickness, the heat treatment may be performed such that, after a heat treatment is performed at a temperature of 600°C, 610°C, 620°C, 630°C, 640°C, 650°C to 720°C, 740°C, 760°C, 780°C, or 800°C or less, the temperature is decreased to about 450°C to 550°C, and a heat treatment is performed at a temperature of 450°C, 460°C, 470°C, 480°C to 520°C, 530°C, 540°C, or 550°C or less. That is, in one sintering profile, after the heat treatment is performed at 600°C to 800°C, the heat treatment may be performed at 450°C to 550°C.

According to the present invention, the heat treatment may be performed for 1 hour, 2 hours, 3 hours or more, 8 hours, 9 hours, or 10 hours or less in order to increase a degree of crystallinity of the coating portion.

## Positive Electrode

The present invention provides a positive electrode including the positive electrode active material.

The positive electrode may include a positive electrode collector and a positive electrode active material layer formed on the positive electrode collector, wherein the positive electrode active material layer may include the above positive electrode active material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and excellent capacity performance may be obtained within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is applied to the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

## Lithium Secondary Battery

The present invention provides a lithium secondary battery including the positive electrode; a negative electrode; a separator disposed between the positive electrode and the negative electrode; and an electrolyte.

The lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$ $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention has excellent performance, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## MODE FOR CARRYING OUT THE INVENTION

## <u>Examples and Comparative Examples</u>

### Example 1

A composite transition metal hydroxide in a form of a secondary particle that was formed by aggregation of tens to hundreds of primary particles (composition: $Ni_{0.885}Co_{0.035}Mn_{0.08}(OH)_2$, average particle diameter ($D_{50}$): 4.20 $\mu$m) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:1.03, and $Al(OH)_3$ (KC DAEJOO), $Y_2O_3$ (Neo Performance Materials), and $ZrO_2$ (R&F) were added thereto in amounts of 1,400ppm, 1,000ppm, and 1,500 ppm, respectively, based on a total weight of the composite transition metal hydroxide and mixed to prepare a mixture.

The mixture was subjected to primary sintering at 890°C for 6 hours to obtain a primary sintered product, and the primary sintered product was ground at room temperature such that an average particle diameter ($D_{50}$) was 3.80 $\mu$m.

The ground primary sintered product and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:0.01, and were subjected to secondary sintering at 820°C for 9 hours to obtain a secondary sintered product, and the secondary sintered product was ground at room temperature to obtain a lithium composite transition metal oxide (composition: $LiNi_{0.87836}Co_{0.03493}Mn_{0.07985}Al_{0.00499}Y_{0.00027}Zr_{0.0016}O_2$) in a form of a single particle having an average particle diameter ($D_{50}$) of 3.80 $\mu$m.

After uniformly mixing the lithium composite transition metal oxide in the form of a single particle with $Co(OH)_2$ (Huayou Cobalt) and $Al(OH)_3$ (KC DAEJOO), a heat treatment was performed at a temperature of 700°C for 5 hours and at a temperature of 500°C for 3 hours in an oxygen atmosphere to prepare a positive electrode active material in which a coating portion containing Co and Al was formed on the lithium composite transition metal oxide in the form of a single particle. In this case, the $Co(OH)_2$ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the $Al(OH)_3$ was mixed in an amount of 0.05 part by weight based on 100 parts by weight of the lithium composite transition metal oxide in the form of a single particle.

### Example 2

A composite transition metal hydroxide in a form of a secondary particle that was formed by aggregation of tens to hundreds of primary particles (composition: $Ni_{0.885}Co_{0.035}Mn_{0.08}(OH)_2$, average particle diameter ($D_{50}$): 4.20 $\mu$m) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:1.03, and $Al(OH)_3$ (KC DAEJOO), $Y_2O_3$ (Neo Performance Materials), and $ZrO_2$ (R&F) were added thereto in amounts of 1,400ppm, 2,000ppm, and 1,500 ppm, respectively, based on a total weight of the composite transition metal hydroxide and mixed to prepare a mixture.

The mixture was subjected to primary sintering at 890°C for 6 hours to obtain a primary sintered product, and the primary sintered product was ground at room temperature such that an average particle diameter ($D_{50}$) was 3.80 $\mu$m.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.01, and were subjected to secondary sintering at 820°C for 9 hours to obtain a secondary sintered product, and the secondary sintered product was ground at room temperature to obtain a lithium composite transition metal oxide (composition: $LiNi_{0.87813}Co_{0.03492}Mn_{0.07983}Al_{0.00499}Y_{0.00054}Zr_{0.00159}O_2$) in a form of a single particle having an average particle diameter ($D_{50}$) of 3.80 $\mu$m.

After uniformly mixing the lithium composite transition metal oxide in the form of a single particle with $Co(OH)_2$ (Huayou Cobalt) and $Al(OH)_3$ (KC DAEJOO), a heat treatment was performed at a temperature of 700°C for 5 hours and at a temperature of 500°C for 3 hours in an oxygen atmosphere to prepare a positive electrode active material in which a coating portion containing Co and Al was formed on the lithium composite transition metal oxide in the form of a single particle. In this case, the $Co(OH)_2$ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the $Al(OH)_3$ was mixed in an amount of 0.05 part by weight based on 100 parts by weight of the lithium composite transition metal oxide in the form of a single particle.

**Example 3**

A composite transition metal hydroxide in a form of a secondary particle that was formed by aggregation of tens to hundreds of primary particles (composition: $Ni_{0.885}Co_{0.035}Mn_{0.08}(OH)_2$, average particle diameter ($D_{50}$): 4.20 $\mu$m) and LiOH were mixed such that a ratio ((Ni+Co+Mn) :Li) of the total number of moles (Ni+Co+Mn) of transition metals included in the composite transition metal hydroxide to the number of moles (Li) of lithium included in the LiOH was 1:1.03, and $Al(OH)_3$ (KC DAEJOO), $Y_2O_3$ (Neo Performance Materials), and $ZrO_2$ (R&F) were added thereto in amounts of 2,800ppm, 1,000ppm, and 1,500 ppm, respectively, based on a total weight of the composite transition metal hydroxide and mixed to prepare a mixture.

The mixture was subjected to primary sintering at 890°C for 6 hours to obtain a primary sintered product, and the primary sintered product was ground at room temperature such that an average particle diameter ($D_{50}$) was 3.80 $\mu$m.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.01, and were subjected to secondary sintering at 820°C for 9 hours to obtain a secondary sintered product, and the secondary sintered product was ground at room temperature to obtain a lithium composite transition metal oxide (composition: $LiNi_{0.87338}Co_{0.03493}Mn_{0.07985}Al_{0.00998}Y_{0.00027}Zr_{0.0159}O_2$) in a form of a single particle having an average particle diameter ($D_{50}$) of 3.80 $\mu$m.

After uniformly mixing the lithium composite transition metal oxide in the form of a single particle with $Co(OH)_2$ (Huayou Cobalt) and $Al(OH)_3$ (KC DAEJOO), a heat treatment was performed at a temperature of 700°C for 5 hours and at a temperature of 500°C for 3 hours in an oxygen atmosphere to prepare a positive electrode active material in which a coating portion containing Co and Al was formed on the lithium composite transition metal oxide in the form of a single particle. In this case, the $Co(OH)_2$ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the $Al(OH)_3$ was mixed in an amount of 0.05 part by weight based on 100 parts by weight of the lithium composite transition metal oxide in the form of a single particle.

**Example 4**

A composite transition metal hydroxide in a form of a secondary particle that was formed by aggregation of tens to hundreds of primary particles (composition: $Ni_{0.885}Co_{0.035}Mn_{0.08}(OH)_2$, average particle diameter ($D_{50}$): 4.20 $\mu$m) and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:1.03, and $Al(OH)_3$ (KC DAEJOO), $Y_2O_3$ (Neo Performance Materials), and $ZrO_2$ (R&F) were added thereto in amounts of 1,400ppm, 1,000ppm, and 3,000 ppm, respectively, based on a total weight of the composite transition metal hydroxide and mixed to prepare a mixture.

The mixture was subjected to primary sintering at 890°C for 6 hours to obtain a primary sintered product, and the primary sintered product was ground at room temperature such that an average particle diameter ($D_{50}$) was 3.80 $\mu$m.

The ground primary sintered product and LiOH were mixed such that a ratio ((Ni+Co+Mn):Li) of the total number of moles (Ni+Co+Mn) of transition metals included in the composite transition metal hydroxide to the number of moles (Li) of lithium included in the LiOH was 1:0.01, and were subjected to secondary sintering at 820°C for 9 hours to obtain a secondary sintered product, and the secondary sintered product was ground at room temperature to obtain a lithium composite transition metal oxide (composition: $LiNi_{0.87651}Co_{0.03486}Mn_{0.07968}Al_{0.00498}Y_{0.00027}Zr_{0.0037}O_2$) in a form of a single particle having an average particle diameter ($D_{50}$) of 3.80 $\mu$m.

After uniformly mixing the lithium composite transition metal oxide in the form of a single particle with $Co(OH)_2$ (Huayou Cobalt) and $Al(OH)_3$ (KC DAEJOO), a heat treatment was performed at a temperature of 700°C for 5 hours and at a temperature of 500°C for 3 hours in an oxygen atmosphere to prepare a positive electrode active material in which a coating portion containing Co and Al was formed on the lithium composite transition metal oxide in the form of a single particle. In this case, the $Co(OH)_2$ was mixed in an amount such that a ratio (B/A) of the number of moles (B) of cobalt contained in the cobalt-containing coating material to the total number of moles (A) of metals excluding lithium, which were included in the lithium composite transition metal oxide in the form of a single particle, was 0.02, and the $Al(OH)_3$ was mixed in an amount of 0.05 part by weight based on 100 parts by weight of the lithium composite transition metal oxide in the form of a single particle.

**Comparative Example 1**

A positive electrode active material, in which a coating portion containing Co and Al was formed on the lithium composite transition metal oxide (composition: $LiNi_{0.8786}Co_{0.03494}Mn_{0.07987}Al_{0.00499}Zr_{0.0016}O_2$) in the form of a single particle, was prepared in the same manner as in Example 1 except that $Y_2O_3$ was not added during the preparation of the mixture.

**Comparative Example 2**

A positive electrode active material, in which a coating portion containing Co and Al was formed on the lithium composite transition metal oxide (composition: $LiNi_{0.88336}CO_{0.03493}Mn_{0.07985}Y_{0.00027}Zr_{0.00159}O_2$) in the form of a single particle, was prepared in the same manner as in Example 1 except that $Al(OH)_3$ was not added during the preparation of the mixture.

**Comparative Example 3**

A positive electrode active material, in which a coating portion containing Co and Al was formed on the lithium composite transition metal oxide (composition: $LiNi_{0.87976}CO_{0.03499}Mn_{0.07998}Al_{0.005}Y_{0.00027}O_2$) in the form of a single particle, was prepared in the same manner as in Example 1 except that $ZrO_2$ was not added during the preparation of the mixture.

<u>**Experimental Examples**</u>

**Experimental Example 1: Positive Electrode Active Material Particle Size Analysis**

After 0.01 g of each of the positive electrode active materials (powders) prepared in Examples 1 to 4 and Comparative Examples 1 to 3 was taken and put in a vial containing 30 ml of ultrapure water and 500 $\mu\ell$ of a dispersant and the positive electrode active material was dispersed with a sonicator for 1 minute, the dispersion was put in a particle size analyzer (PSA) (Microtrac MRB, S3500) to obtain values of $D_{10}$, $D_{50}$, and $D_{90}$ of each positive electrode active material, and a value of $\alpha = (D_{90}-D_{10})/D_{50}$ was calculated. In this case, the $D_{10}$, $D_{50}$, and $D_{90}$ denote particle diameters at 10%, 50%, and 90% of cumulative distribution of volume according to the particle diameter, respectively.

In addition, 3 g of each of the positive electrode active materials (powders) prepared in Examples 1 to 4 and Comparative Examples 1 to 3 was taken and then pressed at a pressure of 6,780.6 $kgf/cm^2$ using an auto pellet press (Carver Inc., 3887.4) to prepare a pellet (prepared by putting 3 g of the positive electrode active material (powder) in a circular pellet holder having a diameter of 13 mm and applying a force until the force equivalent to 9,000 kgf was achieved), and, in order to make the pellet into powder again, the pellet was disintegrated for 1 minute using a mortar. After 0.01 g of the disintegrated positive electrode active material was taken and put in a vial containing 30 ml of ultrapure water and 500 $\mu\ell$ of a dispersant and the positive electrode active material was dispersed with a sonicator for 1 minute, the dispersion was put in the particle size analyzer (PSA) (Microtrac MRB, S3500) to obtain values of $D_{10}$, $D_{50}$, and $D_{90}$ of each positive electrode active material, and a value of $\beta = (D_{90}-D_{10})/D_{50}$ was calculated.

For reference, the disintegration using the mortar does not affect the average particle diameter of the positive electrode active material.

A value according to Equation 1 was calculated by substituting the $\alpha$ and $\beta$ values into Equation 1, and presented in Table 1 below.

[Table 1]

| Category | $\alpha$ | $\beta$ | $|1-\alpha/\beta|$ |
|---|---|---|---|
| Example 1 | 0.9884 | 0.9723 | 0.0166 |
| Example 2 | 0.9842 | 0.9595 | 0.0256 |
| Example 3 | 1.0350 | 1.0676 | 0.0305 |
| Example 4 | 0.9832 | 0.9414 | 0.0444 |

(continued)

| Category | α | β | \|1-α/β\| |
|---|---|---|---|
| Comparative Example 1 | 1.0270 | 1.2348 | 0.1683 |
| Comparative Example 2 | 0.9443 | 0.9721 | 0.0286 |
| Comparative Example 3 | 1.0249 | 1.2889 | 0.2048 |

**Experimental Example 2: Battery Performance Evaluation**

Each of the positive electrode active materials prepared in Examples 1 to 4 and Comparative Examples 1 to 3, a carbon black conductive agent, and a polyvinylidene fluoride (PVDF) binder were mixed in an N-methylpyrrolidone (NMP) solvent at a ratio of 96:2:2 to prepare a positive electrode slurry. One surface of an aluminum current collector was coated with the positive electrode slurry, dried at 150°C, and then roll-pressed to prepare a positive electrode.

A lithium metal electrode was used as a negative electrode, an electrode assembly was prepared by disposing a porous polyethylene separator between the positive electrode and the negative electrode, the electrode assembly was disposed in a battery case, and an electrolyte solution was then injected into the case to prepare each half-cell. In this case, the electrolyte solution was prepared by dissolving 1.0 M $LiPF_6$ in an organic solvent in which ethylene carbonate (EC) :ethyl methyl carbonate (EMC) :diethyl carbonate(DEC) were mixed in a volume ratio of 3:4:3.

Each half-cell thus prepared was charged at 0.1 C to 4.3 V in a constant current-constant voltage (CC-CV) mode at 25°C, and discharged at a constant current of 0.1 C to 3.0 V to measure initial charge capacity and initial discharge capacity and calculate initial efficiency and direct current internal resistance (DCIR), and the results thereof are presented in Table 2 below. For reference, an initial efficiency value is a percentage value of the initial discharge capacity relative to the initial charge capacity, and a DCIR value is a value calculated by dividing a difference between a voltage at 60 seconds while discharging each half-cell at a constant current of 0.1 C and an initial voltage by an applied current.

In addition, a charge and discharge cycle was repeated 50 times at a constant current of 0.33 C in a range of 3.0 V to 4.25 V at 45°C to measure capacity of the lithium secondary battery, and a percentage of 50th cycle discharge capacity relative to 1st cycle discharge capacity was set as a capacity retention and the capacity retentions are presented in Table 2 below. Also, a percentage of DCIR, which was obtained by dividing a voltage drop (ΔV) for 60 seconds in a 50th discharge cycle by the current, relative to DCIR, which was obtained by dividing a voltage drop (ΔV) for 60 seconds in a 1st discharge cycle by the current, was defined as a resistance increase rate and the resistance increase rates are presented in Table 2 below.

[Table 2]

| Category | Initial charge capacity (mAh/g) | Initial discharge capacity (mAh/g) | Initial efficiency (%) | DCIR (Ω) | Capacity retention (%) | Resistance increase rate (%) |
|---|---|---|---|---|---|---|
| Example 1 | 231.2 | 206.3 | 89.2 | 16.2 | 94.7 | 47.0 |
| Example 2 | 230.8 | 206.2 | 89.3 | 16.2 | 94.0 | 49.6 |
| Example 3 | 230.1 | 204.9 | 89.0 | 16.9 | 94.1 | 51.8 |
| Example 4 | 229.4 | 204.1 | 89.0 | 14.7 | 93.9 | 43.1 |
| Comparative Example 1 | 231.1 | 203.4 | 88.0 | 16.7 | 93.5 | 56.3 |
| Comparative Example 2 | 228.6 | 202.6 | 88.6 | 15.7 | 92.1 | 52.5 |
| Comparative Example 3 | 230.9 | 205.8 | 89.1 | 16.6 | 93.8 | 57.2 |

Referring to Tables 1 and 2, with respect to the batteries respectively including the positive electrode active materials of Examples 1 to 4, since the batteries included Ni, Co, Mn, Al, Zr, and Y and satisfied Equation 1 described in the present specification, it may be confirmed that capacity, initial efficiency, lifetime, and resistance performance of the batteries were all excellent.

It may be confirmed that the batteries respectively including the positive electrode active materials of Comparative Examples 1 to 3 had lower initial discharge capacity than the battery including the positive electrode active material of Example 1, and initial efficiency, lifetime, and resistance performance were all reduced. Since the positive electrode active material of Comparative Example 1 did not include Y, it had a problem with grain growth so that it did not satisfy Equation 1 described in this specification, and thus, performance of the battery including the same was degraded. In addition, since the positive electrode active material of Comparative Example 2 did not include Al, it was a form in which cation mixing was increased due to high defects, and thus, performance of the battery including the same was degraded. Also, since the positive electrode active material of Comparative Example 3 did not include Zr capable of improving particle strength, it did not satisfy Equation 1 described in this specification, and thus, performance of the battery including the same was degraded.

**Claims**

1. A positive electrode active material comprising a lithium composite transition metal oxide in a form of a single particle,

    wherein the lithium composite transition metal oxide comprises nickel (Ni), cobalt (Co), manganese (Mn), aluminum (Al), and M1,
    wherein the M1 is at least one selected from zirconium (Zr), yttrium (Y), potassium (K), strontium (Sr), and barium (Ba), and
    satisfying Equation 1:

$$[\text{Equation 1}]$$

$$|1-\alpha/\beta| \leq 0.1$$

    wherein, in Equation 1,
    $\alpha$ is a value of $(D_{90}-D_{10})/D_{50}$, and $\beta$ is a value of $(D_{90}-D_{10})/D_{50}$ after rolling the positive electrode active material at 1,000 kgf/cm$^2$ to 7,000 kgf/cm$^2$.

2. The positive electrode active material of claim 1, wherein the lithium composite transition metal oxide has a layered structure.

3. The positive electrode active material of claim 1, wherein the lithium composite transition metal oxide has an average particle diameter ($D_{50}$) of 3.00 $\mu$m to 8.00 $\mu$m.

4. The positive electrode active material of claim 1, wherein the lithium composite transition metal oxide is doped with the Al and the M1.

5. The positive electrode active material of claim 1, wherein the Al is included in an amount of 500 ppm to 3,000 ppm based on a total weight of the lithium composite transition metal oxide.

6. The positive electrode active material of claim 1, wherein the M1 is included in an amount of 100 ppm to 5,000 ppm based on a total weight of the lithium composite transition metal oxide.

7. The positive electrode active material of claim 1, wherein the lithium composite transition metal oxide comprises 60 mol% or more of the nickel based on the total number of moles of metals excluding lithium.

8. The positive electrode active material of claim 1, wherein the lithium composite transition metal oxide has a composition represented by Formula 1:

    [Formula 1]     $\text{Li}_x[\text{Ni}_a\text{Co}_b\text{Mn}_c\text{Al}_d\text{M1}_e\text{M2}_f]\text{O}_{2-y}\text{A}_y$

    wherein, in Formula 1,

    M1 is at least one selected from Zr, Y, K, Sr, and Ba,
    M2 is at least one selected from boron (B), Ba, cerium (Ce), chromium (Cr), magnesium (Mg), vanadium (V), titanium (Ti), iron (Fe), zinc (Zn), silicon (Si), niobium (Nb), gallium (Ga), tin (Sn), molybdenum (Mo), tungsten (W), and phosphorus (P),
    A is at least one selected from fluorine (F), chlorine (Cl), bromine (Br), iodine (I), and sulfur (S), and
    $1.0 \leq x \leq 1.3$, $0.6 \leq a < 1$, $0.0 < b \leq 0.4$, $0.0 < c \leq 0.4$, $0.0 < d \leq 0.01$, $0.0 < e \leq 0.005$, $0.0 \leq f \leq 0.2$, $a+b+c+d+e+f=1$, and $0 \leq y \leq 0.2$.

9. A method of preparing a positive electrode active material, the method comprising steps of:

(A) preparing a mixture by mixing a positive electrode active material precursor containing nickel (Ni), cobalt (Co), and manganese (Mn), an aluminum-containing raw material, an M1-containing raw material, and a first lithium-containing raw material;
(B) preparing a primary sintered product by performing primary sintering on the mixture at a temperature of 800°C to 950°C; and
(C) preparing a secondary sintered product by mixing a second lithium-containing raw material with the primary sintered product and performing secondary sintering at a temperature of 680°C to 850°C,

wherein the M1 is at least one selected from (Zr), yttrium (Y), potassium (K), strontium (Sr), and barium (Ba), and
the M1-containing raw material is mixed in an amount of 100 ppm to 5,000 ppm based on a total weight of the positive electrode active material precursor.

10. The method of claim 9, further comprising a step of (B') grinding the primary sintered product, before step (C).

11. The method of claim 9, further comprising a step of (C') grinding the secondary sintered product.

12. A positive electrode comprising the positive electrode active material of any one of claims 1 to 8.

13. A lithium secondary battery comprising:

the positive electrode of claim 12;
a negative electrode;
a separator disposed between the positive electrode and the negative electrode; and
an electrolyte.

## INTERNATIONAL SEARCH REPORT

| International application No. |
|---|
| **PCT/KR2024/005123** |

| | |
|---|---|
| **A.** | **CLASSIFICATION OF SUBJECT MATTER** |
| | **H01M 4/525**(2010.01)i; **H01M 4/505**(2010.01)i; **H01M 4/36**(2006.01)i; **C01G 53/00**(2006.01)i; **H01M 4/02**(2006.01)i |

According to International Patent Classification (IPC) or to both national classification and IPC

| | |
|---|---|
| **B.** | **FIELDS SEARCHED** |

Minimum documentation searched (classification system followed by classification symbols)
H01M 4/525(2010.01); H01M 10/052(2010.01); H01M 4/131(2010.01); H01M 4/58(2010.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: 양극 활물질(cathode active material), 리튬 복합 전이금속 산화물(lithium composite transition metal oxide), 단입자(single particle), 도핑(doping)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y<br>A | OU, X. et al. Enabling high energy lithium metal batteries via single-crystal Ni-rich cathode material co-doping strategy. Nature communications. 2022, vol. 13, thesis no. 2319, pp. 1-12.<br>See pages 1-2 and 10. | 9-11<br>1-8,12-13 |
| Y | KR 10-2195187 B1 (SM LAB CO., LTD.) 28 December 2020 (2020-12-28)<br>See paragraphs [0088]-[0089]; and claims 1-2, 12, 14 and 16. | 9-11 |
| A | KR 10-2020-0046749 A (SAMSUNG ELECTRONICS CO., LTD. et al.) 07 May 2020 (2020-05-07)<br>See entire document. | 1-13 |
| A | KR 10-2016-0149162 A (LG CHEM, LTD.) 27 December 2016 (2016-12-27)<br>See entire document. | 1-13 |
| A | KR 10-2020-0145747 A (IUCF-HYU (INDUSTRY-UNIVERSITY COOPERATION FOUNDATION HANYANG UNIVERSITY)) 30 December 2020 (2020-12-30)<br>See entire document. | 1-13 |

☐ Further documents are listed in the continuation of Box C.　　☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 July 2024** | **22 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 672 375 A1

| INTERNATIONAL SEARCH REPORT<br>Information on patent family members | International application No.<br>**PCT/KR2024/005123** |

| Patent document<br>cited in search report | Publication date<br>(day/month/year) | Patent family member(s) | | | Publication date<br>(day/month/year) |
|---|---|---|---|---|---|
| KR 10-2195187 B1 | 28 December 2020 | CN | 113424337 | A | 21 September 2021 |
| | | EP | 3879607 | A1 | 15 September 2021 |
| | | EP | 3879607 | A4 | 31 August 2022 |
| | | EP | 3879607 | B1 | 18 October 2023 |
| | | JP | 2022-523183 | A | 21 April 2022 |
| | | JP | 7262851 | B2 | 24 April 2023 |
| | | KR | 10-2020-0100475 | A | 26 August 2020 |
| | | US | 11456453 | B2 | 27 September 2022 |
| | | US | 2021-0218018 | A1 | 15 July 2021 |
| | | WO | 2020-171367 | A1 | 27 August 2020 |
| KR 10-2020-0046749 A | 07 May 2020 | CN | 111106328 | A | 05 May 2020 |
| | | EP | 3644414 | A1 | 29 April 2020 |
| | | JP | 2020-068210 | A | 30 April 2020 |
| | | JP | 7500178 | B2 | 17 June 2024 |
| | | US | 11183681 | B2 | 23 November 2021 |
| | | US | 2020-0136126 | A1 | 30 April 2020 |
| KR 10-2016-0149162 A | 27 December 2016 | CN | 107408667 | A | 28 November 2017 |
| | | CN | 107408667 | B | 28 July 2020 |
| | | EP | 3312912 | A1 | 25 April 2018 |
| | | EP | 3312912 | A4 | 02 May 2018 |
| | | EP | 3312912 | B1 | 26 August 2020 |
| | | JP | 2018-506156 | A | 01 March 2018 |
| | | JP | 6626509 | B2 | 25 December 2019 |
| | | KR | 10-1913906 | B1 | 31 October 2018 |
| | | US | 10243201 | B2 | 26 March 2019 |
| | | US | 10854870 | B2 | 01 December 2020 |
| | | US | 2018-0013129 | A1 | 11 January 2018 |
| | | US | 2019-0157658 | A1 | 23 May 2019 |
| KR 10-2020-0145747 A | 30 December 2020 | KR | 10-2406774 | B1 | 10 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230051887